# EUROPEAN PATENT SPECIFICATION

(11) **EP 1 527 128 B1**
(45) Date of publication and mention of the grant of the patent: **01.07.2015**
(21) Application number: 03762981.3
(22) Date of filing: 30.05.2003
(51) Int. Cl.: C08K 3/34, C08L 51/00

(54) **FUNCTIONALIZED ELASTOMER NANOCOMPOSITE**
FUNKTIONALISIERTER ELASTOMER NANOVERBUNDSTOFF
NANOCOMPOSITE ELASTOMERE FONCTIONNALISE

(30) Priority: 05.07.2002 US 394098 P
(43) Date of publication of application: 04.05.2005
(73) Proprietor: ExxonMobil Chemical Patents Inc., Baytown, TX 77520 (US)
(72) Inventor: GONG, Caiguo, Pearland, TX 77584 (US); DIAS, Anthony, J., Houston, TX 77062 (US); TSOU, Andy, H., Houston, TX 77059 (US); POOLE, Beverly, J., Houston, TX 77089 (US); KARP, Kriss, R., Kingwood, TX 77345 (US)
(74) Representative: Mareschal, Anne
(86) International application number: PCT/US2003/016944
(87) International publication number: WO 2004/005387

(56) References cited:
- DE-A- 19 842 845

## Description

### FIELD OF THE INVENTION

The present invention relates to nanocomposites comprising clays and elastomers. More particularly, the present invention relates to nanocomposites suitable for air barriers that are a blend of a clay and a functionalized styrenic-based, elastomer, wherein the functionalization may be carried out via Friedel-Crafts reaction.

### BACKGROUND OF THE INVENTION

Nanocomposites are polymer systems containing inorganic particles with at least one dimension in the nanometer range. Elastomers comprising phenyl groups including, for example, styrenic-based elastomers comprising at least one styrene or substituted styrene unit therein, are one type of elastomer that can be incorporated into a nanocomposite. Some examples of these are disclosed in US 6,060,549, 6,103,817, 6,034,164, 5,973,053, 5,936,023, 5,883,173, 5,807,629, 5,665,183, 5,576,373, and 5,576,372. A common type of inorganic particle used in nanocomposites are phyllosilicates, an inorganic substance from the general class of so called "nano-clays" or "clays". Ideally, intercalation should take place in the nanocomposite, wherein the polymer inserts into the space or gallery between the clay surfaces. Ultimately, it is desirable to have exfoliation, wherein the polymer is fully dispersed with the individual nanometer-size clay platelets. Due to the general enhancement in air barrier qualities of various polymer blends when clays are present, there is a desire to have a nanocomposite with low air permeability; especially a dynamically vulcanized elastomer nanocomposite such as used in the manufacture of tires. One method to improve nanocomposite performance is to use functionalized polymers blended with clay. This approach has been limited to materials that are soluble in water or to materials that can be incorporated into the polymerization reaction. This approach has been used to prepare nylon nanocomposites, using for example, oligomeric and monomeric caprolactam as the modifier. Polyolefin nanocomposites, such as polypropylene nanocomposites, have utilized maleic anhydride grafted polypropylenes to achieve some success in the formation of nanocomposites.

To form articles such as air barriers, it is desirable to use elastomers such as isobutylene-based elastomers, for example, poly(isobutylene-co-*p*-alkylstyrene) elastomers and poly(isobutylene-*co*-isoprene) elastomers. While these elastomers have been functionalized in order to improve compatibility or cross-linkability with other polymers, suitability of such functionalized polymers for nanocomposites has not been demonstrated or disclosed. See, for example, US 6,372,855 B1; 6,015,862; 5,849,828; 5,480,810; 5,814,707; 5,700,871; 5,498,673; 5,356,950; JP 11323023 (98 JP-130725 A); EP 0 787 157 B1; and Liu et al., 43 POLYMER BULLETIN 51-58 (1999). What would be desirable is to provide an improved air barrier using such nanomposites that include these styrenic-based elastomers, thus improving upon the air barrier qualities that exist for these elastomers.

Another background reference includes DE 198 42 845 A.

### SUMMARY OF THE INVENTION

The present invention provides a nanocomposite suitable for air barrier applications, the nanocomposite comprising a blend of clay and an elastomer comprising C₄ to C₇ isoolefin derived units; wherein the elastomer also comprises functionalized monomer units pendant to the elastomer. Suitable elastomers include poly(isobutylene-co-*p-*alkylstyrene) elastomers, which are functionalized via Friedel-Crafts reaction with a Lewis acid and a functionalizing agent such as acid anhydrides and/or acylhalides. The clay can be exfoliated by the addition of exfoliating agents such as alkyl amines and silanes to the clay. The composition can include secondary rubbers such as general purpose rubbers, and curatives, fillers, and the like. The nanocomposites of the invention have improved air barrier properties such as are useful for tire innerliners and innertubes.

### DETAILED DESCRIPTION OF THE INVENTION

The present invention provides a nanocomposite material suitable for air barriers such as innerliners and innertubes for transportation vehicles, trucks, automobiles, and the like. The nanocomposite comprises clay, preferably swellable clay, and more preferably exfoliated clay, and an elastomer comprising C₄ to C₇ isoolefin derived units; wherein the elastomer also comprises functionalized monomer units described by one or more of the following groups (I), (II), (III), (IV) and (V) pendant to the elastomer, E: 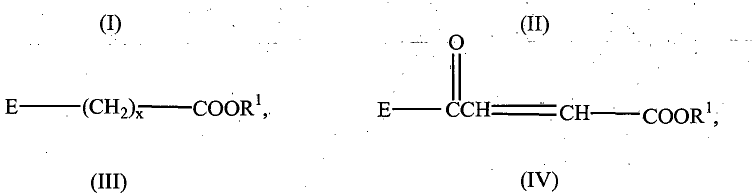 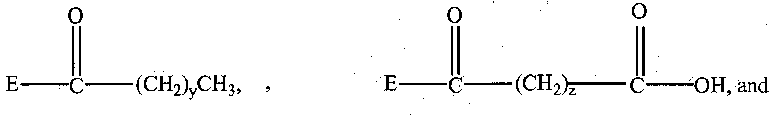 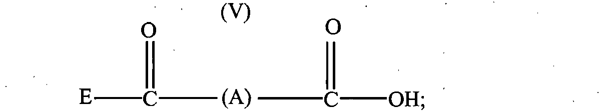 wherein R¹ is selected from hydrogen, C₁ to C₂₀ alkyls, alkenyls or aryls, substituted C₁ to C₂₀ alkyls, alkenyls or aryls; wherein the value of x ranges from 0 to 20, preferably from 1 to 10, and more preferably from 1 to 5; and wherein the value of y ranges from 0 to 20, preferably from 0 to 10; and wherein the value of z ranges from 1 to 20, preferably from 1 to 10, and more preferably from 1 to 5; and wherein "A" is selected from an alkyl, alkenyl, and aryl group, any of which are either substituted or not.

Alternately, the nanocomposite of the present invention can be described as a blend of clay and the reaction product of contacting an elastomer comprising C₄ to C₇ isoolefin derived units, an grafting promoter such as, for example, a Lewis acid, and at least one functionalizing compound, such as, for example, an acid anhydride, acylhalide, or blend thereof. In any case, the clay may be a swellable clay, or an exfoliated clay, wherein the clay is exfoliated with an exfoliating additive such as an amine or silane compound, as described herein.

The elastomer may be any suitable elastomer as described herein, desirably isobutylene elastomers such as poly(isobutylene-co-*p*-alkylstyrene) elastomers. These are described further below. The nanocomposite may also include other secondary rubbers, fillers, and curatives, and may be cured by such means as, for example, heating, to form an article of manufacture that is suitable for air barriers, etc.

As used herein, in reference to Periodic Table "Groups", the new numbering scheme for the Periodic Table Groups are used as in HAWLEY'S CONDENSED CHEMICAL DICTIONARY 852 (13th ed. 1997).

The term "elastomer", as used herein, refers to any polymer or composition of polymers consistent with the ASTM D1566 definition. The term "elastomer" may be used interchangeably with the term "rubber", as used herein.

As used herein, the term "alkyl" refers to a paraffinic hydrocarbon group which may be derived from an alkane by dropping one or more hydrogens from the formula, such as, for example, a methyl group, or CH₃⁻, or an ethyl group, CH₃CH₂⁻, etc.

As used herein, the term "alkenyl" refers to an unsaturated paraffinic hydrocarbon group which may be derived from an alkane by dropping one or more hydrogens from the formula, such as, for example, an ethenyl group, CH₂=CH⁻, and a propenyl group, or CH₃CH=CH⁻, etc.

As used herein, the term "aryl" refers to a hydrocarbon group that forms a ring structure characteristic of aromatic compounds such as, for example, benzene, naphthalene, phenanthrene, anthracene, etc., and typically possess alternate double bonding ("unsaturation") within its structure. An aryl group is thus a group derived from an aromatic compound by dropping one or more hydrogens from the formula such as, for example, phenyl, or C₆H₅⁻.

By "substituted", it is meant substitution of at least one hydrogen group by at least one substituent selected from, for example, halogen (chlorine, bromine, fluorine, or iodine), amino, nitro, sulfoxy (sulfonate or alkyl sulfonate), thiol, alkylthiol, and hydroxy; alkyl, straight or branched chain having 1 to 20 carbon atoms which includes methyl, ethyl, propyl, tert-butyl, isopropyl, isobutyl, etc.; alkoxy, straight or branched chain alkoxy having 1 to 20 carbon atoms, and includes, for example, methoxy, ethoxy, propoxy, isopropoxy, butoxy, isobutoxy, secondary butoxy, tertiary butoxy, pentyloxy, isopentyloxy, hexyloxy, heptryloxy, octyloxy, nonyloxy, and decyloxy; haloalkyl, which means straight or branched chain alkyl having 1 to 20 carbon atoms which is substituted by at least one halogen, and includes, for example, chloromethyl, bromomethyl, fluoromethyl, iodomethyl, 2-chloroethyl, 2-bromoethyl, 2-fluoroethyl, 3-chloropropyl, 3-bromopropyl, 3-fluoropropyl, 4-chlorobutyl, 4-fluorobutyl, dichloromethyl, dibromomethyl, difluoromethyl, diiodomethyl, 2,2-dichloroethyl, 2,2-dibromomethyl, 2,2-difluoroethyl, 3,3-dichloropropyl, 3,3-difluoropropyl, 4,4-dichlorobutyl, 4,4-difluorobutyl, trichloromethyl, 4,4-difluorobutyl, trichloromethyl, trifluoromethyl, 2,2,2-trifluoroethyl, 2,3,3-trifluoropropyl, 1,1,2,2-tetrafluoroethyl, and 2,2,3,3-tetrafluoropropyl. Thus, for example, an example of a "substituted styrenic unit" would include *p*-methylstyrene, *p*-ethylstyrene, etc.

### Elastomer

Elastomers suitable for use in the present invention comprise C₄ to C₇ isoolefin derived units. As used herein, the term "olefin" includes "isoolefins" such as, for example, isobutylene, as well as "multiolefins" such as, for example, isoprene. The elastomer also comprises styrenic derived units selected from styrenes and substituted styrenes, non-limiting examples of which include α-methylstyrene, *o*- (ortho), *m*- (meta), and p (para)-methylstyrene, *o*-, *m*-, and *p*-tert-butylstyrene, etc.

In one aspect of the invention, the elastomer is a random copolymer of a C₄ to C₇ isoolefin, such as isobutylene, and a styrenic monomer, such as a *p*-alkylstyrene comonomer, preferably *p*-methylstyrene containing at least 80%, more preferably at least 90% by weight of the *p*-isomer.

The elastomer may be a copolymer of styrenic derived units and/or substituted styrenic derived units, and olefin derived units as described above. The styrene derived units are preferably present from 3 wt% to 20 wt% based on the total weight of the polymer, more preferably from 5 wt% to 12 wt% such as from 5 wt% to 15 wt%, and most preferably from 8 wt% to 13 wt%, wherein a desirable range of styrene derived unit may include any upper wt% limit with any lower wt% limit described herein. The olefin is preferably present in the elastomer in a range of from 70 wt% to 99.5 wt% by weight of the elastomer, and more preferably 85 wt% to 99.5 wt%. Suitable olefins are selected from C₄ to C₇ isoolefin, non-limiting examples of which include isobutylene and isoprene (a multiolefin). For example, suitable elastomer for nanocomposites of the invention may be a copolymer or terpolymer of any one or two of these monomers with a styrenic monomer such as, for example, α-methylstyrene, o-methylstyrene, *m-*methylstyrene, and *p*-methylstyrene monomers.

Non-limiting examples of elastomers that are suitable for the nanocomposite of the invention include any one or a mixture of poly(styrene-isoprene-butadiene), poly(isoprene-isobutylene-alkylstyrene), star-branched polyisobutylene rubber, poly(isobutylene-co-*p*-methylstyrene), wherein reference to an "alkyl" includes any C₁ to C₁₀ straight or branched chain alkyl.

In one aspect of the invention, the elastomer suitable for the nanocomposite is a non-halogenated elastomer, meaning that the elastomer has not been subjected to a halogenation process, or otherwise comprise halogen moieties.

An example of a suitable elastomer for use in the present invention is poly(isobutylene-co-*p*-methylstyrene), or "XP50" (ExxonMobil Chemical Company, Houston TX). These isoolefin copolymers, their method of preparation and cure are more particularly disclosed in US 5,162,445. These elastomers have a substantially homogeneous compositional distribution such that at least 95% by weight of the polymer has a *p*-alkylstyrene content within 10% of the average *p-*alkylstyrene content of the polymer. Desirable copolymers are also characterized by a molecular weight distribution (Mw/Mn) of between 2 and 20 in one embodiment, and less than 10 in another embodiment, and less than 5 in another embodiment, and less than 2.5 in yet another embodiment, and greater than 2 in yet another embodiment; a preferred viscosity average molecular weight in the range of from 200,000 up to 2,000,000 and a preferred number average molecular weight in the range of from 25,000 to 750,000 as determined by gel permeation chromatography.

The "elastomer", as described herein, may also comprise a composition of one or more of the same elastomer having differing molecular weights to yield a composition having a bimodal molecular weight distribution. This bimodal distribution can be achieved by, for example, having a low molecular weight component in the elastomer. This can be accomplished by physically blending two different MW polymers together, or by *in situ* reactor blending. In one embodiment, the elastomer has a low molecular weight (weight average molecular weight) component of from 5,000 MW to 80,000 MW in one embodiment, and from 10,000 MW to 60,000 MW in another embodiment; the low molecular weight component comprising from 5 to 40 wt% of the composition in one embodiment, and from 10 to 30 wt% of the composition in another embodiment.

When the nanocomposite comprises poly(isobutylene-co-*p*-methylstyrene) as the elastomer, the *p*-methylstyrene derived units are preferably present from 3 wt% to 15 wt% based on the total weight of the polymer, more preferably from 5 wt% to 12 wt%, and most preferably from 8 wt% to 13 wt% wherein a desirable range of *p*-methylstyrene may include any upper wt% limit with any lower wt% limit described herein. The isobutylene derived units are preferably present in the elastomer in a range from 70 to 99.5 wt% by weight of the elastomer, and more preferably 85 to 99.5 wt%.

As used herein, "butyl rubber" refers to both butyl rubber and so-called "star-branched" butyl rubber, described below. Preferably, the olefin polymerization feeds employed in producing the butyl rubber of the invention are those olefinic compounds conventionally used in the preparation of butyl-type rubber polymers. Butyl polymers may be prepared by reacting a comonomer mixture, the mixture having at least (1) a C₄ to C₆ isoolefin monomer component such as isobutylene with (2) a multiolefin, or conjugated diene, monomer component. The isoolefin is in a range from 70 wt% to 99.5 wt% by weight of the total comonomer mixture in one embodiment, and 85 wt% to 99.5 wt% in another embodiment. The multiolefin component in one embodiment is present in the comonomer mixture from 30 to 0.5 wt% in one embodiment, and from 15 wt% to 0.5 wt% in another embodiment. In yet another embodiment, from 8 wt% to 0.5 wt% of the comonomer mixture is multiolefin.

Suitable isoolefins include C₄ to C₇ compounds such as isobutylene, isobutene, 2-methyl-1-butene, 3-methyl-1-butene, 2-methyl-2-butene, and 4-methyl-1-pentene. The multiolefin is a C₄ to C₁₄ conjugated diene such as isoprene, butadiene, 2,3-dimethyl-1,3-butadiene, myrcene, 6,6-dimethyl-fulvene, cyclopentadiene, hexadiene and piperylene. One embodiment of a butyl rubber suitable for use in the invention comprises from 92 wt% to 99.5 wt% of isobutylene and from 0.5 wt% to 8 wt% isoprene, and from 95 wt% to 99.5 wt% isobutylene and 0.5 wt% to 5.0 wt% isoprene in yet another embodiment.

The star-branched butyl rubber is a composition of a butyl rubber, either halogenated or not, and a polydiene or block copolymer, either halogenated or not. The polydienes/block copolymer, or branching agents (hereinafter "polydienes"), are typically cationically reactive and are present during the polymerization of the butyl rubber, or can be blended with the butyl or butyl rubber to form the star-branched butyl rubber.

More particularly, star-branched butyl rubber is typically a composition of the butyl and a copolymer of a polydiene and a partially hydrogenated polydiene, for example, styrene-isoprene-styrene block copolymers. These polydienes are present, based on the monomer wt%, preferably greater than 0.3 wt%, more preferably from 0.3 wt% to 3 wt%, and most preferably from 0.4 wt% to 2.7 wt%.

The elastomer or functionalized elastomer is preferably present in the nanocomposite of the invention from 10 to 100 phr more preferably from 20 to 80 phr, and most preferably from 30 to 70 phr, wherein a desirable range may be any combination of any upper phr limit with any lower phr limit.

### Clay

Compositions of the invention include at least one functionalized elastomer blended by any suitable means with at least one clay, for example, a swellable clay, which may or may not be exfoliated using an exfoliating agent. Swellable clay materials suitable for the purposes of this invention include natural or synthetic phyllosilicates, particularly smectic clays such as montmorillonite, nontronite, beidellite, volkonskoite, laponite, hectorite, saponite, sauconite, magadite, kenyaite, stevensite and the like, as well as vermiculite, halloysite, aluminate oxides, hydrotalcite and the like. These swellable clays generally comprise particles containing a plurality of silicate platelets having a thickness of 8-12Å, and contain exchangeable cations such as Na⁺, Ca⁺², K⁺ or Mg⁺² present at the interlayer surfaces.

The swellable clay may be exfoliated by treatment with organic molecules (swelling or exfoliating "agents" or "additives") capable of undergoing ion exchange reactions with the cations present at the interlayer surfaces of the layered silicate. Suitable exfoliating agents include cationic surfactants such as ammonium, alkylamines or alkylammonium (primary, secondary, tertiary and quaternary), phosphonium or sulfonium derivatives of aliphatic, aromatic or arylaliphatic amines, phosphines and sulfides. Desirable amine compounds (or the corresponding ammonium ion) are those with the structure R²R³R⁴N, wherein R², R³, and R⁴ are C₁ to C₃₀ alkyls or alkenes or C₁ to C₂₀ alkyls or alkenes, which may be the same or different. In one aspect, the exfoliating agent is a so called long chain tertiary amine, wherein at least R² is a C₁₄ to C₂₀ alkyl or alkene.

Another class of exfoliating agents include those which can be covalently bonded to the interlayer surfaces. These include polysilanes of the structure - Si(R⁵)₂R⁶ where R⁵ is the same or different at each occurrence and is selected from alkyl, alkoxy or oxysilane and R⁶ is an organic radical compatible with the matrix polymer of the composite.

Other suitable exfoliating agents include protonated amino acids and salts thereof containing 2-30 carbon atoms such as 12-aminododecanoic acid, epsilon-caprolactam and like materials. Suitable swelling agents and processes for intercalating layered silicates are disclosed in US 4,472,538, 4,810,734, 4,889,885 as well as WO92/02582.

In one aspect, the exfoliating agents includes all primary, secondary and tertiary amines and phosphines; alkyl and aryl sulfides and thiols; and their polyfunctional versions. Desirable additives include: long-chain tertiary amines such as N,N-dimethyl-octadecylamine, N,N-dioctadecyl-methylamine, so called dihydrogenated tallowalkyl-methylamine and the like, and amine-terminated polytetrahydrofuran; long-chain thiol and thiosulfate compounds like hexamethylene sodium thiosulfate.

The exfoliating additive such as described herein is present in the composition in an amount to achieve optimal air retention as measured by the permeability testing described herein. For example, the additive may be present from 0.1 to 20 phr, preferably from 0.2 to 15 phr, and more preferably from 0.3 to 10 phr. The exfoliating agent, if present, may be added to the composition at any stage; for example, the additive may be added to the interpolymer, followed by addition of the clay, or may be added to the elastomer and clay mixture; or the additive may be first blended with the clay, followed by blending with the interpolymer.

In another aspect of the invention, improved elastomer impermeability is achieved by the presence of at least one polyfunctional curative. An example of such polyfunctional curatives can be described by the formula Z--R⁷--Z', wherein R⁷ is one of a C₁ to C₁₅ alkyl, C₂ to C₁₅ alkenyl, and C₆ to C₁₂ cyclic aromatic moiety, substituted or unsubstituted; and Z and Z' are the same or different and are one of a thiosulfate group, mercapto group, aldehyde group, carboxylic acid group, peroxide group, alkenyl group, or other similar group that is capable of crosslinking, either intermolecularly or intramolecularly, one or more strands of a polymer having reactive groups such as unsaturation. So-called bis-thiosulfate compounds are an example of a desirable class of polyfunctional compounds included in the above formula. Non-limiting examples of such polyfunctional curatives are as hexamethylene bis(sodium thiosulfate) and hexamethylene bis(cinnamaldehyde), and others are well known in the rubber compounding arts. These and other suitable agents are disclosed in, for example, the BLUE BOOK, MATERIALS, COMPOUNDING INGREDIENTS, MACHINERY AND SERVICES FOR RUBBER (Don. R. Smith, ed., Lippincott & Petto Inc. 2001). The polyfunctional curative, if present, may be present in the composition from 0.1 to 8 phr, preferably from 0.2 to 5 phr.

Treatment with the exfoliating agents described above results in intercalation or "exfoliation" of the layered platelets as a consequence of a reduction of the ionic forces holding the layers together and introduction of molecules between layers which serve to space the layers at distances of greater than 4Å, preferably greater than 9Å. This separation allows the layered silicate to more readily sorb polymerizable monomer material and polymeric material between the layers and facilitates further delamination of the layers when the intercalate is shear mixed with matrix polymer material to provide a uniform dispersion of the exfoliated layers within the polymer matrix.

The amount of clay or exfoliated clay incorporated in the nanocomposites is sufficient to develop an improvement in the mechanical properties and barrier properties of the nanocomposite, for example, tensile strength or oxygen permeability. Amounts generally will range from 0.1 wt% to 50 wt%, preferably from 0.5 wt% to 10 wt%, more preferably from 0.5 wt% to 15 wt%, such as from 1 wt% to 30 wt%, most preferably from 1 wt% to 5 wt%, based on the polymer content of the nanocomposite. Expressed in parts per hundred rubber, the clay or exfoliated clay may be present from 1 to 30 phr, preferably from 5 to 20 phr. In one embodiment, the exfoliated clay is an alkylamine-exfoliated clay.

### Secondary Rubber Component

A secondary rubber, or "general purpose rubber" component may be present in compositions and end use articles of the present invention. These rubbers may be blended by any suitable means with the elastomer or elastomer/clay composition. These rubbers include, but are not limited to, natural rubbers, polyisoprene rubber, poly(styrene-*co*-butadiene) rubber (SBR), polybutadiene rubber (BR), poly(isoprene-*co*-butadiene) rubber (IBR), styrene-isoprene-butadiene rubber (SIBR), ethylene-propylene rubber (EPM), ethylene-propylene-diene rubber (EPDM), polysulfide, nitrile rubber, propylene oxide polymers, star-branched butyl rubber and halogenated star-branched butyl rubber, brominated butyl rubber, chlorinated butyl rubber, star-branched polyisobutylene rubber, star-branched brominated butyl (polyisobutylene/isoprene copolymer) rubber; poly(isobutylene-co-*p*-methylstyrene) and halogenated poly(isobutylene-co-*p*-methylstyrene), such as, for example, terpolymers of isobutylene derived units, *p*-methylstyrene derived units, and *p*-bromomethylstyrene derived units, and mixtures thereof.

A desirable secondary rubber component is natural rubber. Natural rubbers are described in detail by *Subramaniam* in RUBBER TECHNOLOGY 179-208 (Maurice Morton, ed., Chapman & Hall 1995). Example of suitable natural rubbers of the present invention are selected from Malaysian rubber such as SMR CV, SMR 5, SMR 10, SMR 20, and SMR 50 and mixtures thereof, wherein the natural rubbers have a Mooney viscosity at 100°C (ML 1+4) of from 30 to 120, more preferably from 40 to 65. The Mooney viscosity test referred to herein is in accordance with ASTM D-1646.

Polybutadiene (BR) rubber is another desirable secondary rubber useful in the composition of the invention. The Mooney viscosity of the polybutadiene rubber as measured at 100°C (ML 1+4) may range from 35 to 70, such as from 40 to about 65 or from 45 to 60. Some commercial examples of these synthetic rubbers useful in the present invention are NATSYN™ (Goodyear Chemical Company), and BUDENE™ 1207 or BR 1207 (Goodyear Chemical Company). A desirable rubber is high cis-polybutadiene (cis-BR). By "cis-polybutadiene" or "high cis-polybutadiene", it is meant that 1,4-bis polybutadiene is used, wherein the amount of cis component is at least 95%. An example of high cis-polybutadiene commercial products used in the composition BUDENE™ 1207.

Rubbers of ethylene and propylene derived units such as EPM and EPDM are also suitable as secondary rubbers. Examples of suitable comonomers in making EPDM are ethylidene norbornene, 1,4-hexadiene, dicyclopentadiene, as well as others. These rubbers are described in RUBBER TECHNOLOGY 260-283 (1995). A suitable ethylene-propylene rubber is commercially available as VISTALON™ (ExxonMobil Chemical Company, Houston TX).

In another aspect of the invention, the secondary rubber is a halogenated rubber as part of the terpolymer composition. The halogenated butyl rubber is brominated butyl rubber or chlorinated butyl rubber. General properties and processing of halogenated butyl rubbers are described in THE VANDERBILT RUBBER HANDBOOK 105-122 (Robert F. Ohm ed., R.T. Vanderbilt Co., Inc. 1990), and in RUBBER TECHNOLOGY 311-321 (1995). Butyl rubbers, halogenated butyl rubbers, and star-branched butyl rubbers are described by Edward Kresge and H.C. Wang in 8 KIRK-OTHMER ENCYCLOPEDIA OF CHEMICAL TECHNOLOGY 934-955 (John Wiley & Sons, Inc. 4th ed. 1993).

The secondary rubber component of the present invention includes, but is not limited to at least one or more of brominated butyl rubber, chlorinated butyl rubber, star-branched polyisobutylene rubber, star-branched brominated butyl (polyisobutylene/isoprene copolymer) rubber; halogenated poly(isobutylene-*co*-*p-*methylstyrene), such as, for example, terpolymers of isobutylene derived units, p-methylstyrene derived units, and p-bromomethylstyrene derived units (BrIBMS), and the like halomethylated aromatic interpolymers as in US 5,162,445; US 4,074,035; and US 4,395,506; halogenated isoprene and halogenated isobutylene copolymers, polychloroprene, and the like, and mixtures of any of the above. Some examples of suitable halogenated rubber component are also described in US 4,703,091 and US 4,632,963.

Semi-crystalline copolymers ("SCC") are also suitable secondary "rubber" components. Semi-crystalline copolymers are described in WO 00/69966. Generally, the SCC is a copolymer of ethylene or propylene derived units and α-olefin derived units, the α-olefin having from 4 to 16 carbon atoms. The SCC can also be a copolymer of ethylene derived units and α-olefin derived units, the α-olefin having from 4 to 10 carbon atoms, wherein the SCC has some degree of crystallinity. The SCC can also be a copolymer of 1-butene derived units and another α-olefin derived unit, the other α-olefin having from 5 to 16 carbon atoms, wherein the SCC also has some degree of crystallinity. The SCC can also be a copolymer of ethylene and styrene.

The secondary rubber component of the elastomer composition may be present in a range from up to 90 phr, preferably from up to 50 phr, more preferably from up to 40 phr, and most preferably from up to 30 phr. In yet another aspect, the secondary rubber is present from at least 2 phr, preferably from at least 5 phr, more preferably from at least 5 phr, and most preferably from at least 10 phr. A desirable composition may include any combination of any upper phr limit and any lower phr limit. For example, the secondary rubber, either individually or as a blend of rubbers such as, for example NR and BR, may be present from 5 phr to 90 phr, preferably from 10 to 80 phr, more preferably from 30 to 70 phr, such as from 40 to 60 phr, most preferably from 5 to 50 phr, conveniently from 5 to 40 phr, for example from 20 to 60 phr, and even more preferably from 20 to 50 phr, the chosen amount depending upon the desired end use application of the composition.

The elastomeric composition may have one or more filler components such as, for example, calcium carbonate, silica, talc, titanium dioxide, and carbon black. In one aspect, the filler is carbon black or modified carbon black, and combinations of any of these. In another aspect, the filler is a blend of carbon black and silica. The preferred filler for such articles as tire treads and sidewalls is reinforcing grade carbon black present at a level of from 10 to 100 phr of the blend, more preferably from 30 to 80 phr, and more preferably from 50 to 80 phr. Useful grades of carbon black, as described in RUBBER TECHNOLOGY, 59-85, range from N110 to N990. More desirably, examples of the carbon black useful in, for example, tire treads are N229, N351, N339, N220, N234 and N110 provided in ASTM (D3037, D1510, and D3765). Examples of the carbon black useful in, for example, sidewalls in tires, are N330, N351, N550, N650, N660, and N762.

The fillers of the present invention may be any size and typically range, for example, from 0.0001 µm to 100 µm. As used herein, silica is meant to refer to any type or particle size silica or another silicic .acid derivative, or silicic acid, processed by solution, pyrogenic or the like methods and having a surface area, including untreated, precipitated silica, crystalline silica, colloidal silica, aluminum or calcium silicates, fumed silica, and the like.

One or more crosslinking agents are preferably used in the elastomeric compositions of the present invention, especially when silica is the primary filler, or is present in combination with another filler. More preferably, the coupling agent may be a bifunctional organosilane crosslinking agent. An "organosilane crosslinking agent" is any silane coupled filler and/or crosslinking activator and/or silane reinforcing agent known to those skilled in the art including, but not limited to, vinyl triethoxysilane, vinyl-tris-(beta-methoxyethoxy)silane, methacryloylpropyltrimethoxysilane, gamma-amino-propyl triethoxysilane (sold commercially as A1100 by Witco), gamma-mercaptopropyltrimethoxysilane (A189 by Witco) and the like, and mixtures thereof. In one embodiment, bis-(3-triethoxysilypropyl)tetrasulfide (sold commercially as "Si69") is employed.

A processing aid may also be present in the composition of the invention. Processing aids include, but are not limited to, plasticizers, tackifiers, extenders, chemical conditioners, homogenizing agents and peptizers such as mercaptans, petroleum and vulcanized vegetable oils, mineral oils, parraffinic oils, polybutene oils, naphthenic oils, aromatic oils, waxes, resins, rosins, and the like. The aid is typically present from 1 to 70 phr, preferably from 3 to 60 phr, and more preferably from 5 to 50 phr. Some commercial examples of processing aids are SUNDEX™ (Sun Chemical), a naphthenic processing oil, PARAPOL™ (ExxonMobil Chemical Company), a polybutene processing oil having a number average molecular weight of from 800 to 3000, and FLEXON™ (ExxonMobil Chemical Company), a paraffinic petroleum oil.

The compositions produced in accordance with the present invention typically contain other components and additives customarily used in rubber mixes, such as effective amounts of other nondiscolored and nondiscoloring processing aids, pigments, accelerators, crosslinking and curing materials, antioxidants, antiozonants. General classes of accelerators include amines, guanidines, thioureas, thiazoles, thiurams, sulfenamides, sulfenimides, thiocarbamates, xanthates, and the like. Crosslinking and curing agents include sulfur, zinc oxide, and fatty acids. Peroxide cure systems may also be used. The components, and other curatives, are typically present from 0.1 to 10 phr in the composition.

Generally, polymer blends, for example, those used to produce tires, are crosslinked. It is known that the physical properties, performance characteristics, and durability of vulcanized rubber compounds are directly related to the number (crosslink density) and type of crosslinks formed during the vulcanization reaction. (*See, e.g.,* Helt et al., The Post Vulcanization Stabilization for NR in RUBBER WORLD, 18-23 (1991). Generally, polymer blends may be crosslinked by adding curative molecules, for example sulfur, metal oxides, organometallic compounds, radical initiators, etc., followed by heating. In particular, the following metal oxides are common curatives that will function in the present invention: ZnO, CaO, MgO, Al₂O₃, CrO₃, FeO, Fe₂O₃, and NiO. These metal oxides can be used alone or in conjunction with the corresponding metal fatty acid complex (e.g., zinc stearate, calcium stearate, etc.), or with the organic and fatty acids added alone, such as stearic acid, and optionally other curatives such as sulfur or a sulfur compound, an alkylperoxide compound, diamines or derivatives thereof (e.g., DIAK products sold by DuPont). (See also, Formulation Design and Curing Characteristics of NBR Mixes for Seals, RUBBER WORLD 25-30 (1993). This method of curing elastomers may be accelerated and is often used for the vulcanization of elastomer blends.

The acceleration of the cure process is accomplished in the present invention by adding to the composition an amount of an accelerant, often an organic compound. The mechanism for accelerated vulcanization of natural rubber involves complex interactions between the curative, accelerator, activators and polymers. Ideally, all of the available curative is consumed in the formation of effective crosslinks which join together two polymer chains and enhance the overall strength of the polymer matrix. Numerous accelerators are known in the art and include, but are not limited to, the following: stearic acid, diphenyl guanidine (DPG), tetramethylthiuram disulfide (TMTD), 4,4'-dithiodimorpholine (DTDM), tetrabutylthiuram disulfide (TBTD), benzothiazyl disulfide (MBTS), hexamethylene-1,6-bisthiosulfate disodium salt dihydrate (sold commercially as DURALINK™ HTS by Flexsys), 2-(morpholinothio) benzothiazole (MBS or MOR), blends of 90% MOR and 10% MBTS (MOR 90), N-tertiarybutyl-2-benzothiazole sulfenamide (TBBS), and N-oxydiethylene thiocarbamyl-N-oxydiethylene sulfonamide (OTOS), zinc 2-ethyl hexanoate (ZEH), and "thioureas".

### Functionalized Elastomer

The nanocomposites of the present invention comprise a blend of a functionalized elastomer and clay, preferably swellable clay, and more preferably exfoliated clay. Elastomers containing such untis as *p*-alkylstyrene and other styrenic moieties may be functionalized in accordance with the process of the present invention. Particularly suitable *p*-alkylstyrene containing polymers for functionalization are copolymers of an isoolefin or olefin having from 2 to 7 carbon atoms and a *p*-alkylstyrene, desirably *p*-methylstyrene, as described above. It is particularly preferred to use a copolymer of isobutylene and *p*-methylstyrene. The foregoing elastomers are functionalized by any suitable technique known in the art that will result in the elastomer having a carboxylic acid moiety or ester moiety pendant to the elastomer polymer chain. In one aspect of the invention, the elastomer is functionalized by reacting the elastomer, such as, for example, *p*-alkylstyrene containing polymers or copolymers, with a functionalizing compound in the presence of a grafting promoter, either as a melt or in the presence of a diluent, wherein the functionalizing agent is any suitable agent that will facilitate the creation of a carboxylic acid or ester group pendant to the elastomer. Suitable functionalizing compounds include acid anhydrides, carboxylic acids and acylhalides, typically reacted in the presence of a Lewis acid and the elastomer.

For purposes of the present invention, a "grafting promoter" is an element, compound, reagent, blend of compounds, or apparatus (e.g., potentiostat) capable of facilitating the grafting of carboxylic acid and/or ester moieties as described above onto an elastomer, particular, elastomers as described herein. Non-limiting examples of grafting promoters includes Lewis acids and their equivalents, alkali metals, in particular Li and Na, and alkaline earth metals, in particular Ca.

The functionalized elastomer that results from contacting the grafting promoter, elastomer and functionalizing compound is an elastomer having one or more carboxylic acid or ester groups pendant to the elastomer backbone. These groups pendant to elastomer, E, may be described by any number of structures, such as described by one or more of the following groups (I), (II), (III), (IV) and (V) pendant to the elastomer, E: 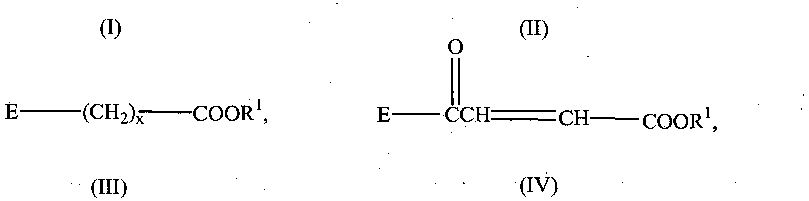 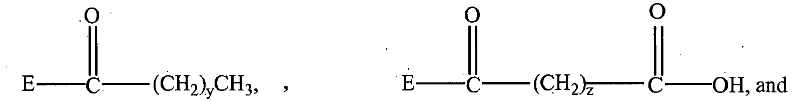 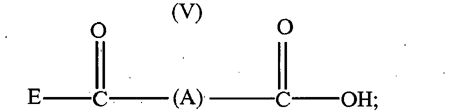 wherein R¹ is selected from hydrogen, C₁ to C₂₀ alkyls, alkenyls or aryls, substituted C₁ to C₂₀ alkyls, alkenyls or aryls; wherein the value of x ranges from 0 to 20, preferably from 1 to 10, and more preferably from 1 to 5; and wherein the value of y ranged from 0 to 20, preferably from 0 to 10; and wherein the value of z ranges from 1 to 20, preferably from 1 to 10, and more preferably from 1 to 5; and wherein "A" is an aryl group, either substituted or not.

Preferably, R¹ is selected from hydrogen, C₁ to C₆ alkyls, alkenyls and aryls, substituted C₁ to C₈ alkyls, alkenyls and aryls, hydroxyl, and C₁ to C₈ alkoxys.

Any part of the elastomer, any monomer unit or any moiety pendant to the elastomer may be functionalized as a result of the functionalization. Preferably, the styrenic or substituted styrenic derived unit of the elastomer is the functionalized monomer unit.

The functionalizing compound includes any compound that will either facilitate the addition or "grafting" of the groups represented by (I) through (V) onto the elastomer of the invention or a compound that itself is grafted onto the elastomer. In one aspect of the invention, the functionalizing compound is selected from CO₂ and the following (VI) and (VII): 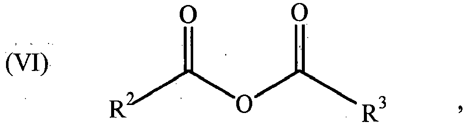 and 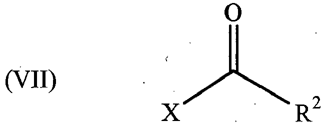 wherein R² and R³ are the same or different and are selected from hydrogen, C₁ to C₁₀ alkyls, alkenyls and aryls, hydroxyl, and C₁ to C₁₀ alkoxys, wherein R² and R³ may form a ring structure; and wherein X is selected from hydroxyl and halides, preferably bromine and chlorine, and alkoxy groups. Suitable alkoxy groups are such groups as -OCH₃, -OCH₂CH₃, -OCH₂CH₂CH₃, -OCH₂(CH₃)CH₃, etc.

Non-limiting examples of functionalizing compounds include acid anhydrides and acylhalides. Particularly useful anhydrides include succinic anhydride, maleic anhydride, phthalic anhydride, glutaric anhydride, citraconic anhydride, itaconic anhydride, and other cyclic anhydrides, and mixtures thereof

Particularly useful acylhalides include succinyl chloride, glutaryl chloride, itaconyl chloride, malonyl chloride, adipoyl chloride, diethylmalonyl dichloride, 3-methyladipoyl chloride, pimeloyl chloride, suberoyl chloride, azelaoyl chloride, sebacoyl chloride, isophthaloyl dichloride, phthaloyldichloride, terephthaoyl chloride and mixtures thereof.

Preferably, the acylhalide will have from 2 to 14 carbon atoms and the acid anhydride will have from 4 to 12 carbon atoms.

A suitable Lewis acid catalyst can be used in preparing the functionalized elastomers; desirable Lewis acid catalysts are based on metals such as boron, aluminum, gallium, indium, titanium, zirconium, tin, arsenic, antimony and bismuth. Especially preferred are the halide containing compounds of the foregoing metals such as boron trifluoride, aluminum trichloride, aluminum dichloride and the like.

The functionalization can be carried out in the presence of a hydrocarbon diluent such as aliphatic hydrocarbons or in the presence of a polar solvent such as carbon disulfide, nitrobenzene, methylene chloride and 1,2 dichloroethane and the like. It is desirable to carry out the process as a melt blend at a temperature wherein the elastomer exists as a molten or semi-molten state, or from 0 to 200°C. such as from 20 to 180°C.

The functionalization of the polymers typically is carried out at temperatures of from -50°C to 150 °C, for times sufficient to add the functional group, that is, the alkyl carbonyl, alkenyl carboxylic acid, to the aromatic ring of the *p*-alkylstyrene containing polymer.

The ratio of functionalizing compound, such as the acylhalide or acid anhydride, to the styrenic units in the *p*-alkylstyrene containing polymer can vary widely. In general, however, from 0.01 to 10 moles of acylhalide or acid anhydride or unsaturated anhydride per 1 mole of styrenic moieties in the styrene containing polymer will be employed.

For elastomers containing *p*-methylstyrene, the benzyl group can be oxidized in the presence of an oxidizing agent to produce carboxylic acid on the elastomer (structure I, X = 0). Alternatively, the benzyl group can react with an alkali metal such as Li, then CO₂ with protonation to produce carboxylic acid on the elastomer (structure I, X = 0). Both of these functional polymers can also be used for the nanocomposite preparation disclosed herein.

The functional groups "grafted" onto the elastomer backbone may be present from 0.01 wt% to 15 wt%, by weight of the grafted functionalized (or "grafted") elastomer preferably from 0.05 wt% to 10 wt% , and more preferably from 0.1 wt% to 8 wt%.

One aspect of the invention just described is a nanocomposite comprising clay and an elastomer comprising C₄ to C₇ isoolefin and a styrenic monomer; wherein the elastomer comprises functionalized monomer units described by the following groups (I), (II), (III), (IV) and (V) pendant to the elastomer, E: 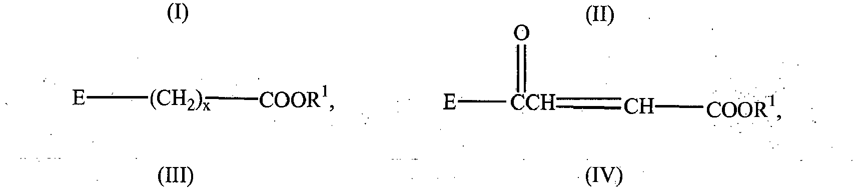 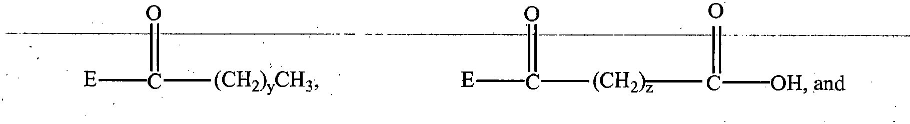 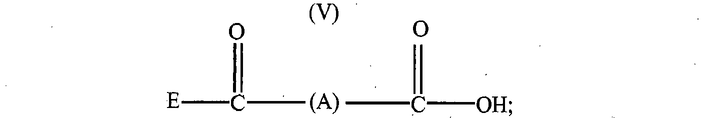 wherein R¹ is selected from hydrogen, C₁ to C₂₀ alkyls, alkenyls or aryls, substituted C₁ to C₂₀ alkyls, alkenyls or aryls; wherein the value of x ranges from 0 to 20, preferably from 1 to 10, and more preferably from 1 to 5; and wherein the value of y ranged from 0 to 20, preferably from 0 to 10; and wherein the value of z ranges from 1 to 20, preferably from 1 to 10, and more preferably from 1 to 5; and wherein "A" is an aryl group, either substituted or not.

Alternately, the nanocomposite of the invention can be described as comprising clay and the reaction product of contacting an elastomer comprising C₄ to C₇ isoolefin and a styrenic monomer, a grafting promoter and at least one functionalizing compound. The product of contacting the elastomer and the functionalizing compound and grafting promoter may be described as an elastomer having one or more carboxylic acid and (or) an ester moieties pendant to the elastomer in one embodiment, or described as any one or more of structures (I) through (IV) above. The amount of functionalization (or number of functionalized units) is from 0.01 wt% to 15 wt%.

The elastomer comprises styrene derived units, such as alkylstyrene derived units, preferably *p*-alkylstyrene derived units. More preferably, the elastomer comprises α-methylstyrene, o-methylstyrene, *m*-methylstyrene, and *p*-methylstyrene units. A particularly suitable elastomer is poly(isobutylene-*co*-*p*-methylstyrene).

The styrenic monomer units may be selected from styrenic derived units and substituted styrenic derived units.

Preferably, the isoolefin is selected from one or more of isobutylene, isobutene, 2-methyl-1-butene, 3-methyl-1-butene, 2-methyl-2-butene, and 4-methyl-1-pentene.

Preferably, the styrene derived units are present from 1 to 15 wt% of the elastomer.

Preferably, the elastomer comprises *p*-methylstyrene derived units.

The elastomer may also comprises multiolefin derived units.

Preferably, the functionalized units are present on the elastomer from 0.01 wt% to 15 wt% of the elastomer.

xThe elastomer is preferably selected from any one or a mixture of poly(styrene-isoprene-butadiene), star-branched polyisobutylene rubber, poly(isobutylene-*co*-*p*-methylstyrene),

The clay may be swellable or exfoliated, wherein the clay has been treated with an exfoliating agent to form an exfoliated clay. The exfoliating agent may be selected from ammonium ion, alkylamines, alkylammonium ion (primary, secondary, tertiary and quaternary), phosphonium or sulfonium derivatives of aliphatic, aromatic or arylaliphatic amines, phosphines and sulfides and blends thereof

The clay is present from 0.1 wt% to 50 wt% of the nanocomposite, preferably from 0.5 wt% to 15 wt% of the nanocomposite; more preferably from 1 wt% to 30 wt% of the nanocomposite.

The nanocomposite may also comprise other components such as a filler selected from carbon black, modified carbon black, silica, precipitated silica, and blends thereof

Further, the nanocomposite may also comprise one or more curing agents, wherein the curing agent is selected from zinc, zinc stearate, fatty acids, sulfur, diamine, diepoxy, polyamine, polyepoxy and mixtures thereof.

Further, the nanocomposite may also comprise a secondary rubber or "general purpose rubber", the secondary rubber selected from natural rubber, polybutadiene rubber, nitrile rubber, silicon rubber, polyisoprene rubber, poly(styrene-*co*-butadiene) rubber, poly(isoprene-*co*-butadiene) rubber, styrene-isoprene-butadiene rubber, ethylene-propylene rubber, brominated butyl rubber, chlorinated butyl rubber, halogenated isoprene, halogenated isobutylene copolymers, polychloroprene, star-branched polyisobutylene rubber, star-branched brominated butyl rubber, poly(isobutylene-*co*-isoprene) rubber; halogenated poly(isobutylene-*co-p*-methylstyrene), ethylene-propylene rubber and mixtures thereof

In one aspect of the invention, the nanocomposite is formed using any suitable method known in the art into an air barrier such as an innerliner or innertube suitable for vehicle tires, truck tires, automotive and motorcycle tires, and other tires.

The invention also includes a method of forming a nanocomposite comprising contacting clay, an elastomer, an grafting promoter, and at least one functionalizing compound, wherein the elastomer comprises a C₄ to C₇ isoolefin and a styrenic monomer.

The elastomer can first be contacted with the functionalizing compound, followed by contacting with the clay. Alternatively, the elastomer, clay and acid functionalizing compound are contacted simultaneously.

Preferably, the grafting promoter is a Lewis acid selected from halide and alkyl containing compounds of boron, aluminum, gallium, indium, titanium, zirconium, tin, arsenic, antimony and bismuth, and mixtures thereof.

The method may also comprise contacting a diluent selected from carbon disulfide, nitrobenzene, methylene chloride, 1,2 dichloroethane, hexane, cyclohexane and mixtures thereof.

Alternatively, the elastomer and functionalizing compound are melt blended, thus forming the functionalized elastomer.

Preferably, the functionalizing compound is selected from CO₂ and the following structures: 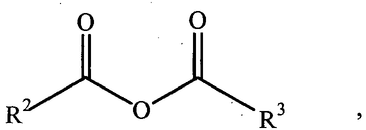 and 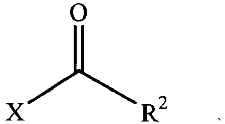 wherein R² and R³ are the same or different and are selected from hydrogen, C₁ to C₁₀ alkyls, alkenyls and aryls, hydroxyl, and C₁ to C₁₀ alkoxys, wherein R² and R³ may form a ring structure; and wherein X is selected from hydroxyl and halides, preferably bromine and chlorine, and alkoxy groups. In another embodiment, R₂ and R₃ are the same or different and are selected from hydrogen, C₁ to C₈ alkyls, alkenyls and aryls, wherein R₂ and R₃ may form 4 to 6 member ring structures such as maleic anhydride, succinic anhydride, phthalic anhydride and substituted derivatives thereof.

The following examples illustrate the invention:

### TEST METHODS

*Permeability Testing.* All specimens were compression molded with slow cooling to provide defect free pads. A compression and curing press was used for rubber samples. Typical thickness of a compression molded pad is about 0.381 mm (15 mil). using an Arbor press, 50.8 mm (2") diameter disks were then punched out from molded pads for permeability testing. These disks were conditioned in a vacuum oven at 60°C overnight prior to the measurement. The oxygen permeation measurements were done using a Mocon OX-TRAN 2/61 permeability tester at 40°C under the principle of *R. A. Pasternak et. al.* in 8 JOURNAL OF POLYMER SCIENCE: PART A-2 467 (1970). Disks thus prepared were mounted on a template and sealed with a vacuum grease. 69 kPa (10 psi) nitrogen was kept on one side of the disk, whereas the other side is 69 kPa (10 psi) oxygen. Using the oxygen sensor on the nitrogen side, increase in oxygen concentration on the nitrogen side with time could be monitored. The time required for oxygen to permeate through the disk, or for oxygen concentration on the nitrogen side to reach a constant value, is recorded and used to determine the oxygen permeability.

*XRD Measurement.* The average d-spacing between clay plates in the final composite is measured by standard small angle X-Ray Instrumentation using 2D Area Detector System. The scan range is 0 to 10°, 2θ and collection time of 900 seconds.

### EXAMPLES

The present invention may be better understood by reference to the following example and Tables.

As a comparative example (Example 1), the permeability of poly(isobutylenc-co-p-methylstyrene) ("XP 50") comprising 11.5 wt% p-methylstyrene units by weight of the polymer was measured. The permeability data are summarized in Table 2.

In example 2, the elastomer XP-50 containing 11.5 wt% *p*-methylstyrene (55 g) and succinic anhydride (3g) were dissolved in methylene chloride (CH₂Cl₂). To the solution was added AlCl₃ (8 g). After being stirred for 1.5 hours, the solution was poured into methanol containing 120 mmol HCl to afford the functionalized elastomer. Next, the functionalized elastomer (40.5 g) was melt blended in a Brabender at 160°C, followed by addition of Cloisite 6A clay (4.5 g) and mixing for 10 min. A sample of this composition was pressed into a film tested for permeability. These data are summarized in Table 2. An unpressed sample was measured for d-spacings. The clay d-spacings from XRD measurements was 5.04 nm.

Thus the d-spacing of clay in nanocomposite (Example 2) is much larger than that (3.60 nm) of original Cloisite 6A. The significant increase of the clay d-spacing after nanocomposite formation indicates a strong intecalant or exfoliation took place.

For Example 3, XP 50 containing 11.5 % *p*-methylstyrene (55 g) and succinic anhydride (1.0 g) were dissolved in CH₂Cl₂. To this solution was added AlCl₃ (2.7 g). After being stirred for 1.5 hours, the solution was poured into methanol containing 100 mmol HCl and the obtained product was washed with acetone and dried under vacuum overnight. Next, the modified product was melt blended in a Brabender at 160 °C and mixed with 4.5 g of clay (Cloisite 6A) for 10 minutes at a rotor speed of 60 rpm. A sample of this composition was tested for permeability, data for which is summarized in Table 2.

For Example 4, XP 50 containing 11.5 % *p*-methylstyrene (75 g) and succinic anhydride (1.03 g) was dissolved in CH₂Cl₂. To this solution was added AlCl₃ (2.8 g). After being stirred for 1.5 hours, the solution is poured into methanol containing 100 mmol HCl and the obtained product was washed with acetone and dried under vacuum overnight. Then the functionalized elastomer was melt blended in a Brabender at 160 °C and mixed with 4.5 g of clay (Cloisite 6A) for 10 minutes at a rotor speed of 60 rpm. A sample of this composition was tested for permeability and, data for which is summarized in Table 2.

Example 5 illustrates the use of functionalized polymer in blend application. For example 5, the following procedure was carried out: Butyl rubber (XP50, 31.5 grams) and modified butyl (9.0 grams) from example 2 were melt in Brabender for three minutes with a rotor speed of 60 rpm at 160 °C. To the melt was added Cloisite 6A (4.5 grams). The mixture was further mixed for 10 minutes. A sample of this composition was tested for permeability and, data for which is summarized in Table 2.

Nanocomposites of the present invention have a permeation coefficient of less than 7 mm·cc/(m²·day·mmHg) at 40°C in one embodiment, and less than 6 mm·cc/(m²·day·mmHg) at 40°C in another embodiment, and less than 5 mm·cc/(m²·day·mmHg) at 40°C in yet another embodiment, and between 2 and 7 mm·cc/(m²·day·mmHg) at 40°C in yet another embodiment.

While the present invention has been described and illustrated by reference to particular embodiments, those of ordinary skill in the art will appreciate that the invention lends itself to many different variations not illustrated herein. Further, certain features of the present invention are described in terms of a set of numerical upper limits and a set of numerical lower limits. It should be appreciated that ranges formed by any combination of these limits are within the scope of the invention unless otherwise indicated.

**Table 1. Material Description**

| **Component** | **Description** | **Material Source** |
|---|---|---|
| maleic anhydride | "functionalizing compound" | Aldrich Chemical Company |
| methylene chloride | CH₂Cl₂ | Aldrich Chemical Company |
| succinic anhydride | "functionalizing compound" | Aldrich Chemical Company |
| 6A | Montmorillonite clay treated with di-methyl di-hydrogenated tallow alkyl ammonia chloride | Cloisite 6A, Southern Clay |

**TABLE 2. Permeability data¹**

| **Example** | **functionalizing compound (grams)** | **grafted functional unit (wt% relative to elastomer)** | **permeation coefficient (mm·cc/(m²·day·m mHg)) at 40°C** |
|---|---|---|---|
| 1 (comp.) | - | - | 7.67 |
| 2 | succinic anhydride (3.0 g) | 2.4 | 3.60 |
| 3 | succinic anhydride (1.0 g) | 0.71 | 3.85 |
| 4 | succinic anhydride (1.03 g) | 0.48 | 4.46 |
| 5 | -- | -- | 5.70 |

| | | | |
|---|---|---|---|
| 1. all samples were dried under vacuum prior to permeation measurements. | | | |

## Claims

1. A nanocomposite comprising clay and an elastomer, wherein the elastomer is a random copolymer of a C₄ to C₇ isoolefin and a styrenic monomer, and wherein the elastomer also comprises functionalized monomer units described by one or more of the following groups (I), (II), (III), (IV) and (V) pendant to the elastomer, E: 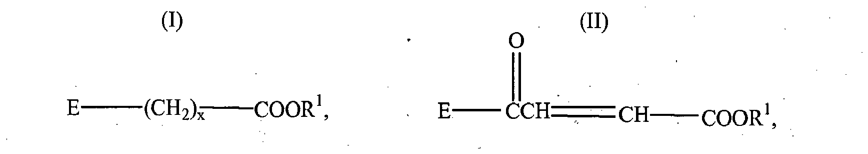 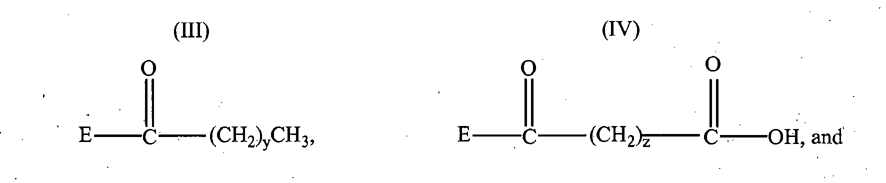 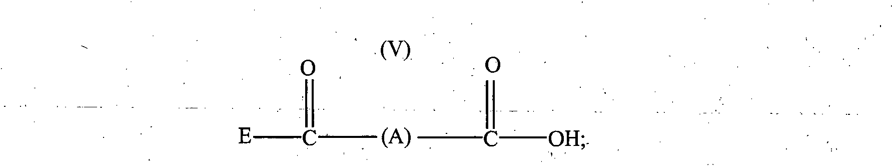 wherein R¹ is selected from hydrogen, C₁ to C₂₀ alkyls, alkenyls or aryls, substituted C₁ to C₂₀ alkyls, alkenyls or aryls; wherein the value of x ranges from 0 to 20, preferably from 1 to 10, and more preferably from 1 to 5; and wherein the value of y ranged from 0 to 20, preferably from 0 to 10; and wherein the value of z ranges from 1 to 20, preferably from 1 to 10, and more preferably from 1 to 5; and wherein "A" is an aryl group, either substituted or not.

2. The nanocomposite of Claim 1, wherein the styrenic derived units in the elastomer are substituted styrenic derived units.

3. The nanocomposite of Claims 1 or 2, wherein the styrenic units are functionalized.

4. The nanocomposite of Claim 1, wherein the elastomer is not halogenated.

5. The nanocomposite of Claim 1, wherein the isoolefin is selected from one or more of isobutylene, isobutene, isoprene, 2-methyl-1-butene, 3-methyl-1-butene, 2-methyl-2-butene, and 4-methyl-1-pentene.

6. The nanocomposite of Claim 2, wherein the styrene derived units are present from 1 to 15 wt% of the elastomer.

7. The nanocomposite of Claim 1, wherein the elastomer comprises *p-*methylstyrene derived units.

8. The nanocomposite of Claim 1, wherein the elastomer comprises isobutylene derived units and *p*-methylstyrene derived units.

9. The nanocomposite of Claim 1, wherein the elastomer also comprises multiolefin derived units.

10. The nanocomposite of Claim 1, wherein the elastomer includes any one or a mixture of poly(styrene-isoprene-butadiene), star-branched polyisobutylene rubber, poly(isobutylene-*co-p*-methylstyrene).

11. The nanocomposite of Claim 1, wherein the functionalized units are present on the elastomer from 0.01 wt% to 15 wt% of the elastomer.

12. The nanocomposite of Claim 1, wherein the clay has been treated with an exfoliating agent to form an exfoliated clay.

13. The nanocomposite of Claim 12, wherein the exfoliating agent is selected from ammonium ion, alkylamines, alkylammonium ion (primary, secondary, tertiary and quaternary), phosphonium or sulfonium derivatives of aliphatic, aromatic or arylaliphatic amines, phosphines and sulfides and blends thereof.

14. The nanocomposite of Claim 1, wherein the clay is present from 0.1 wt% to 50 wt% of the nanocomposite.

15. The nanocomposite of Claim 1, wherein the clay is present from 0.5 wt% to 15 wt% of the nanocomposite.

16. The nanocomposite of Claim 1, also comprising a filler selected from carbon black, modified carbon black, silica, precipitated silica, and blends thereof.

17. The nanocomposite of Claim 1, also comprising one or more curing agents.

18. The nanocomposite of Claim 17, wherein the curing agent is selected from zinc, zinc stearate, fatty acids, sulfur, diamine, diepoxy, polyamine, polyepoxy and mixtures thereof

19. The nanocomposite of Claim 1, also comprising a secondary rubber selected from natural rubber, polybutadiene rubber, nitrile rubber, silicon rubber, polyisoprene rubber, poly(styrene-*co*-butadiene) rubber, poly(isoprene-*co*-butadiene) rubber, styrene-isoprene-butadiene rubber, ethylene-propylene rubber, brominated butyl rubber, chlorinated butyl rubber, halogenated isoprene, halogenated isobutylene copolymers, polychloroprene, star-branched polyisobutylene rubber, star-branched brominated butyl rubber, poly(isobutylene-*co*-isoprene) rubber; halogenated poly(isobutylene-*co*-*p*-methylstyrene), ethylene-propylene rubber and mixtures thereof

20. A tire innerliner comprising the nanocomposite of Claim 1.

21. A method of forming a nanocomposite according to claim 1, the method comprising contacting the clay, the elastomer, a grafting promoter, and at least one functionalizing compound.

22. The method of Claim 21, wherein the elastomer is first contacted with the functionalizing compound and the grafting promoter, followed by contacting with the clay.

23. The method of Claim 21, wherein the elastomer, clay. grafting promoter and functionalizing compound are contacted simultaneously.

24. The method of Claim 21, wherein the grafting promoter is a Lewis acid selected from halide and alkyl containing compounds of boron, aluminum, gallium, indium, titanium, zirconium, tin, arsenic, antimony and bismuth, and mixtures thereof.

25. The method of Claim 21, further comprising contacting a diluent selected from carbon disulfide, nitrobenzene, methylene chloride, 1,2 dichloroethane, hexane, cyclohexane and mixtures thereof.

26. The method of Claim 21, wherein the elastomer and functionalizing compound are melt blended.

27. The method of Claim 21, wherein the functionalizing compound is selected from CO₂ and the following: 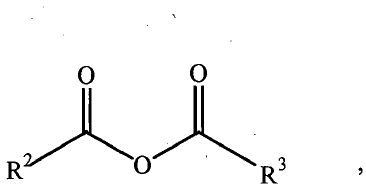 and 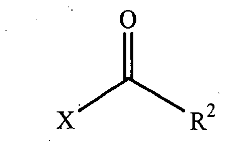 wherein R² and R³ are the same or different and are selected from hydrogen, C₁ to C₁₀ alkyls, alkenyls and aryls, hydroxyl, and C₁ to C₁₀ alkoxys, wherein R² and R³ may form a ring structure; and wherein X is selected from hydroxyl, halides, preferably bromine and chlorine, and alkoxy groups.

28. The method of Claim 21, wherein the functionalizing compound is selected from succinic anhydride, maleic anhydride, phthalic anhydride, glutaric anhydride citraconic anhydride, itaconic anhydride, and other cyclic anhydrides, succinyl chloride, glutaryl chloride, itaconyl chloride, malonyl chloride, adipoyl chloride, diethylmalonyl dichloride, 3-methyladipoyl chloride, pimeloyl chloride, suberoyl chloride, azelaoyl chloride , sebacoyl chloride, isophthaloyl dichloride, phthaloyldichloride, terephthaoyl chloride.

29. The method of Claim 21, wherein the styrenic derived units in the elastomer are substituted styrenic derived units.

30. The method of Claim 21, wherein the isoolefin is selected from one or more of isobutylene, isobutene, isoprene, 2-methyl-1-butene, 3-methyl-1-butene, 2-methyl-2-butene, and 4-methyl-1-pentene.

31. The method of Claim 29, wherein the styrene derived units are present from 1 to 15 wt% of the elastomer.

32. The method of Claim 21, wherein the elastomer comprises *p-*methylstyrene derived units.

33. The method of Claim 21, wherein the elastomer comprises isobutylene derived units and *p*-methylstyrene derived units.

34. The method of Claim 21, wherein the elastomer also comprises multiolefin derived units.

35. The method of Claim 21, wherein the elastomer includes any one or a mixture of poly(styrene-isoprene-butadiene), star-branched polyisobutylene rubber, poly(isobutylene-*co-p*-methylstyrene).

36. The method of Claim 21, wherein the elastomer is functionalized by contacting with the functionalizing compound, wherein the functional groups are present on the elastomer from 0.01 wt% to 15 wt% of the elastomer.

37. The method of Claim 21, wherein the clay has been treated with an exfoliating agent to form an exfoliated clay.

## Patentansprüche

1. Nanokomposit, das Ton und Elastomer umfasst, wobei das Elastomer ein statistisches Copolymer von C₄- bis C₇-Isoolefin und Styrolmonomer ist, und wobei das Elastomer ferner funktionalisierte Monomereinheiten umfasst, die durch oder eine oder mehrere der folgenden Gruppen (I), (II), (III), (IV) und (V) beschrieben werden und seitenständig von dem Elastomer E sind: 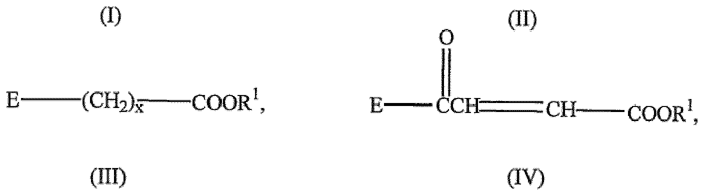 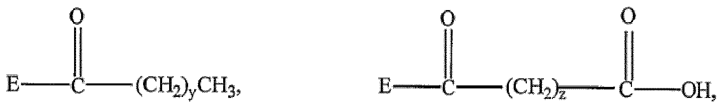 und 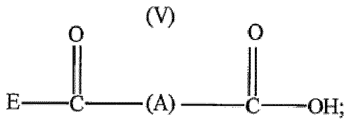 wobei R¹ ausgewählt ist aus Wasserstoff, C₁- bis C₂₀-Alkyl, -Alkenyl oder -Aryl, substituiertem C₁- bis C₂₀-Alkyl, -Alkenyl oder -Aryl, wobei der Wert für x im Bereich von 0 bis 20 liegt, vorzugsweise 1 bis 10 und insbesondere 1 bis 5, und wobei der Wert für y im Bereich von 0 bis 20 liegt, vorzugsweise 0 bis 10, und wobei der Wert für z im Bereich von 1 bis 20 liegt, vorzugsweise 1 bis 10 und insbesondere 1 bis 5, und wobei "A" eine Arylgruppe ist, entweder substituiert oder nicht.

2. Nanokomposit nach Anspruch 1, wobei die von Styrol abgeleiteten Einheiten in dem Elastomer substituierte von Styrol abgeleitete Einheiten sind.

3. Nanokomposit nach Anspruch 1 oder 2, wobei die Styroleinheiten funktionalisiert sind.

4. Nanokomposit nach Anspruch 1, wobei das Elastomer nicht halogeniert ist.

5. Nanokomposit nach Anspruch 1, wobei das Isoolefin ausgewählt ist aus einem oder mehreren Isobutylen, Isobuten, Isopren, 2-Methyl-1-buten, 3-Methyl-1-buten, 2-Methyl-2-buten und 4-Methyl-1-penten.

6. Nanokomposit nach Anspruch 6, wobei die von Styrol abgeleiteten Einheiten zu 1 bis 15 Gew.-% des Elastomers vorhanden sind.

7. Nanokomposit nach Anspruch 1, wobei das Elastomer von *p*-Methylstyrol abgeleitete Einheiten umfasst.

8. Nanokomposit nach Anspruch 1, wobei das Elastomer von Isobutylen abgeleitete Einheiten und von *p*-Methylstyrol abgeleitete Einheiten umfasst.

9. Nanokomposit nach Anspruch 1, wobei das Elastomer ferner von Multiolefin abgeleitete Einheiten umfasst.

10. Nanokomposit nach Anspruch 1, wobei das Elastomer irgendeines oder eine Mischung von Poly(styrol-isopren-butadien), Stern-verzweigtem Polyisobutylenkautschuk, Poly(isobutylen-*co*-*p*-methylstyrol) einschließt.

11. Nanokomposit nach Anspruch 1, wobei die funktionalisierten Einheiten in dem Elastomer zu 0,01 Gew.-% bis 15 Gew.-% des Elastomers vorhanden sind.

12. Nanokomposit nach Anspruch 1, wobei der Ton mit Blähmittel behandelt worden ist, um Blähton zu bilden.

13. Nanokomposit nach Anspruch 12, wobei das Blähmittel ausgewählt ist aus Ammoniumionen, Alkylaminen, Alkylammoniumionen (primär, sekundär, tertiär und quartär), Phosphonium- oder Sulfonium-Derivaten von aliphatischen, aromatischen oder arylaliphatischen Aminen, Phosphinen und Sulfiden und Gemischen davon.

14. Nanokomposit nach Anspruch 1, wobei der Ton zu 0,1 Gew.-% bis 50 Gew.-% des Nanokomposits vorhanden ist.

15. Nanokomposit nach Anspruch 1, wobei der Ton zu 0,5 Gew.-% bis 15 Gew.-% des Nanokomposits vorhanden ist.

16. Nanokomposit nach Anspruch 1, das ferner einen Füllstoff ausgewählt aus Ruß, modifiziertem Ruß, Kieselsäure, Fällungskieselsäure und Gemischen davon umfasst.

17. Nanokomposit nach Anspruch 1, das ferner ein oder mehrere Vulkanisiermittel umfasst.

18. Nanokomposit nach Anspruch 17, wobei das Vulkanisiermittel ausgewählt ist aus Zink, Zinkstearat, Fettsäuren, Schwefel, Diamin, Diepoxy, Polyamin, Polyepoxy und Mischungen davon.

19. Nanokomposit nach Anspruch 1, das ferner einen zweiten Kautschuk ausgewählt aus natürlichem Kautschuk, Poly-butadienkautschuk, Nitrilkautschuk, Silikonkautschuk, Polyisoprenkautschuk, Poly(styrol-co-butadien)-Kautschuk, Poly(isopren-co-butadien)-Kautschuk, Styrol-Isopren-Butadien-Kautschuk, Ethylen-Propylen-Kautschuk, bromiertem Butylkautschuk, chloriertem Butylkautschuk, halogeniertem Isopren, halogenierten Isobutylen-Copolymeren, Polychloropren, Stern-verzweigtem Polyisobutylenkautschuk, Stern-verzweigtem bromierten Butylkautschuk, Poly(isobutylen-co-isopren)-Kautschuk, halogeniertem Poly(isobutylen-co-p-methylstyrol), Ethylen-Propylen-Kautschuk und Mischungen davon umfasst.

20. Reifen-Innerliner, der das Nanokomposit gemäß Anspruch 1 umfasst.

21. Verfahren zum Bilden eines Nanokomposits gemäß Anspruch 1, bei dem der Ton, das Elastomer, ein Pfropfförderungsmittel und mindestens eine funktionalisierende Verbindung miteinander in Kontakt gebracht werden.

22. Verfahren nach Anspruch 21, bei dem das Elastomer zuerst mit der funktionalisierenden Verbindung und dem Pfropfförderungsmittel in Kontakt gebracht wird, gefolgt von Inkontaktbringen mit dem Ton.

23. Verfahren nach Anspruch 21, bei dem das Elastomer, Ton, Pfropfförderungsmittel und funktionalisierende Verbindung gleichzeitig miteinander in Kontakt gebracht werden.

24. Verfahren nach Anspruch 21, bei dem das Pfropfförderungsmittel eine Lewissäure ausgewählt aus Halogen und Alkyl enthaltenden Verbindungen von Bor, Aluminium, Gallium, Indium, Titan, Zirkonium, Zinn, Arsen, Antimon und Wismut und Mischungen davon ist.

25. Verfahren nach Anspruch 21, bei dem ferner ein Verdünnungsmittel ausgewählt aus Schwefelkohlenstoff, Nitrobenzol, Methylenchlorid, 1,2-Dichlorethan, Hexan, Cyclohexan und Mischungen davon in Kontakt gebracht wird.

26. Verfahren nach Anspruch 21, bei dem das Elastomer und die funktionalisierende Verbindung schmelzgemischt werden.

27. Verfahren nach Anspruch 21, bei dem die funktionalisierende Verbindung ausgewählt ist aus CO₂ und den Folgenden: 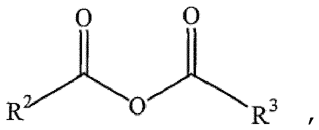 und 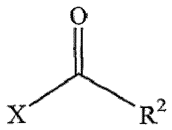 wobei R² und R³ gleich oder verschieden sind und ausgewählt sind aus Wasserstoff, C₁- bis C₁₀-Alkyl, -Alkenyl und -Aryl, Hydroxyl und C₁- bis C₁₀-Alkoxy, wobei R² und R³ eine Ringstruktur bilden können und wobei X ausgewählt ist aus Hydroxy, Halogenid, vorzugsweise Brom und Chlor, und Alkoxygruppen.

28. Verfahren nach Anspruch 21, bei dem die funktionalisierende Verbindung ausgewählt ist aus Bernsteinsäureanhydrid, Maleinsäureanhydrid, Phtalsäureanhydrid, Glutarsäureanhydrid, Citraconsäureanhydrid, Itaconsäureanhydrid und anderen zyklischen Anhydriden, Bernsteinsäurechlorid, Glutarylchlorid, Itaconylchlorid, Malonylchlorid, Adipoylchlorid, Diethylmalonyldichlorid, 3-Methyladipoylchlorid, Pimeloylchlorid, Suberoylchlorid, Azelaoylchlorid, Sebacoylchlorid, Isophthaloyldichlorid, Phthaloyldichlorid, Terephthaloylchlorid.

29. Verfahren nach Anspruch 21, bei dem die von Styrol abgeleiteten Einheiten in dem Elastomer substituierte von Styrol abgeleitete Einheiten sind.

30. Verfahren nach Anspruch 21, bei dem das Isoolefin ausgewählt ist aus einem oder mehreren von Isobutylen, Isobuten, Isopren, 2-Methyl-1-buten, 3-Methyl-1-buten, 2-Methyl-2-buten und 4-Methyl-1-penten.

31. Verfahren nach Anspruch 29, bei dem die von Styrol abgeleiteten Einheiten zu 1 bis 15 Gew.-% des Elastomers vorhanden sind.

32. Verfahren nach Anspruch 21, bei dem das Elastomer von *p*-Methylstyrol abgeleitete Einheiten umfasst.

33. Verfahren nach Anspruch 21, bei dem das Elastomer von Isobutylen abgeleitete Einheiten und von *p*-Methylstyrol abgeleitete Einheiten umfasst.

34. Verfahren nach Anspruch 21, bei dem das Elastomer ferner von Multiolefin abgeleitete Einheiten umfasst.

35. Verfahren nach Anspruch 21, bei dem das Elastomer irgendeines oder eine Mischung von Poly(styrol-isopren-butadien), Stern-verzweigtem Polyisobutylenkautschuk, Poly(isobutylen-*co*-*p*-methylstyrol) einschließt.

36. Verfahren nach Anspruch 21, bei dem das Elastomer durch Inkontaktbringen mit der funktionalisierenden Verbindung funktionalisiert worden ist, wobei die funktionellen Gruppen an dem Elastomer zu 0,01 Gew.-% bis 15 Gew.-% des Elastomers vorhanden sind.

37. Verfahren nach Anspruch 21, wobei der Ton mit Blähmittel behandelt worden ist, um Blähton zu bilden.

## Revendications

1. Nanocomposite comprenant de l'argile et un élastomère, dans lequel l'élastomère est un copolymère aléatoire d'une isooléfine en C₄ à C₇ et d'un monomère styrénique, et dans lequel l'élastomère comprend également des unités monomères fonctionnalisées décrites par un ou plusieurs des groupes (I), (II), (III), (IV) et (V) suivants pendants à l'élastomère E : 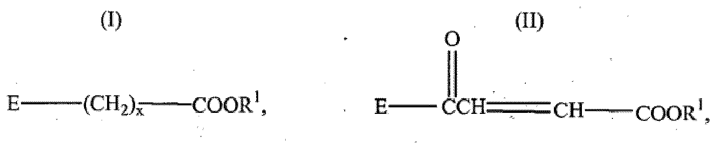 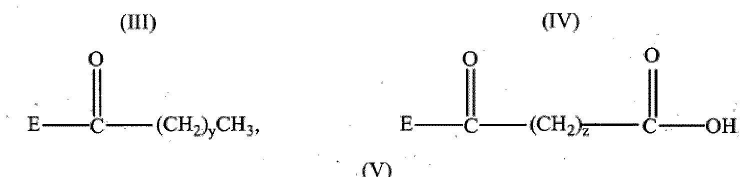 et 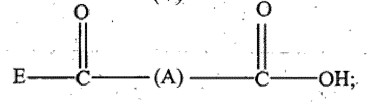 dans lesquels R¹ est choisi parmi l'hydrogène, les alkyles, alcényles ou aryles en C₁ à C₂₀, les alkyles, alcényles ou aryles en C₁ à C₂₀ substitués ; la valeur de x est de 0 à 20, de préférence de 1 à 10 et de manière davantage préférée de 1 à 5 ; et la valeur de y est de 0 à 20, de préférence de 0 à 10 ; et la valeur de z est de 1 à 20, de préférence de 1 à 10 et de manière davantage préférée de 1 à 5 ; et « A » est un groupe aryle, substitué ou non.

2. Nanocomposite selon la revendication 1, dans lequel les unités dérivées de styrène dans l'élastomère sont des unités dérivées de styrène substituées.

3. Nanocomposite selon les revendications 1 ou 2, dans lequel les unités styréniques sont fonctionnalisées.

4. Nanocomposite selon la revendication 1, dans lequel l'élastomère n'est pas halogéné.

5. Nanocomposite selon la revendication 1, dans lequel l'isooléfine est choisi parmi l'isobutylène, l'isobutène, l'isoprène, le 2-méthyl-1-butène, le 3-méthyl-1-butène, le 2-méthyl-2-butène et/ou le 4-méthyl-1-pentène.

6. Nanocomposite selon la revendication 2, dans lequel les unités dérivées de styrène sont présentes à hauteur de 1 à 15 % en poids de l'élastomère.

7. Nanocomposite selon la revendication 1, dans lequel l'élastomère comprend des unités dérivées de *p-*méthylstyrène.

8. Nanocomposite selon la revendication 1, dans lequel l'élastomère comprend des unités dérivées d'isobutylène et des unités dérivées de *p-*méthylstyrène.

9. Nanocomposite selon la revendication 1, dans lequel l'élastomère comprend également des unités dérivées de multioléfine.

10. Nanocomposite selon la revendication 1, dans lequel l'élastomère comprend du poly(styrène-isoprène-butadiène), du caoutchouc de polyisobutylène à ramification en étoile et/ou du poly(isobutylène-*co*-*p-*méthylstyrène).

11. Nanocomposite selon la revendication 1, dans lequel les unités fonctionnalisées sont présentes sur l'élastomère à hauteur de 0,01 % en poids à 15 % en poids de l'élastomère.

12. Nanocomposite selon la revendication 1, dans lequel l'argile a été traitée avec un agent exfoliant pour former une argile exfoliée.

13. Nanocomposite selon la revendication 12, dans lequel l'agent exfoliant est choisi parmi un ion ammonium, les alkylamines, un ion alkylammonium (primaire, secondaire, tertiaire et quaternaire), les dérivés de phosphonium ou de sulfonium d'amines aliphatiques, aromatiques ou arylaliphatiques, les phosphines et les sulfures et leurs mélanges.

14. Nanocomposite selon la revendication 1, dans lequel l'argile est présente à hauteur de 0,1 % en poids à 50 % en poids du nanocomposite.

15. Nanocomposite selon la revendication 1, dans lequel l'argile est présente à hauteur de 0,5 % en poids à 15 % en poids du nanocomposite.

16. Nanocomposite selon la revendication 1, comprenant également une charge choisie parmi le noir de carbone, le noir de carbone modifié, la silice, la silice précipitée et leurs mélanges.

17. Nanocomposite selon la revendication 1, comprenant également un ou plusieurs agents de durcissement.

18. Nanocomposite selon la revendication 17, dans lequel l'agent de durcissement est choisi parmi le zinc, le stéarate de zinc, les acides gras, le soufre, une diamine, un diépoxy, une polyamine, un polyépoxy et leurs mélanges.

19. Nanocomposite selon la revendication 1, comprenant également un caoutchouc secondaire choisi parmi le caoutchouc naturel, le caoutchouc de polybutadiène, le caoutchouc de nitrile, le caoutchouc de silicone, le caoutchouc de polyisoprène, le caoutchouc de poly(styrène-*co*-butadiène), le caoutchouc de poly(isoprène-*co*-butadiène), le caoutchouc de styrène-isoprène-butadiène, le caoutchouc d'éthylène-propylène, le caoutchouc de butyle bromé, le caoutchouc de butyle chloré, l'isoprène halogéné, les copolymères d'isobutylène halogénés, le polychloroprène, le caoutchouc de polyisobutylène à ramification en étoile, le caoutchouc de butyle bromé à ramification en étoile, le caoutchouc de poly(isobutylène-*co*-isoprène) ; le poly(isobutylène-*co*-*p*-méthylstyrène) halogéné, le caoutchouc d'éthylène-propylène et leurs mélanges.

20. Calandrage intérieur de pneu comprenant le nanocomposite selon la revendication 1.

21. Procédé de formation d'un nanocomposite selon la revendication 1, le procédé comprenant la mise en contact de l'argile, de l'élastomère, d'un promoteur de greffage et d'au moins un composé de fonctionnalisation.

22. Procédé selon la revendication 21, dans lequel l'élastomère est tout d'abord mis en contact avec le composé de fonctionnalisation et le promoteur de greffage, puis mis en contact avec l'argile.

23. Procédé selon la revendication 21, dans lequel l'élastomère, l'argile, le promoteur de greffage et le composé de fonctionnalisation sont mis en contact simultanément.

24. Procédé selon la revendication 21, dans lequel le promoteur de greffage est un acide de Lewis choisi parmi les composés contenant des halogénures et des alkyles de bore, d'aluminium, de gallium, d'indium, de titane, de zirconium, d'étain, d'arsenic, d'antimoine et de bismuth, et leurs mélanges.

25. Procédé selon la revendication 21, comprenant en outre la mise en contact d'un diluant choisi parmi le disulfure de carbone, le nitrobenzène, le chlorure de méthylène, le 1,2-dichloroéthane, l' hexane, le cyclohexane et leurs mélanges.

26. Procédé selon la revendication 21, dans lequel l'élastomère et le composé de fonctionnalisation sont mélangés à l'état fondu.

27. Procédé selon la revendication 21, dans lequel le composé de fonctionnalisation est choisi parmi CO₂ et les composés suivants : 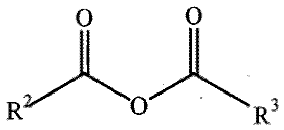 et 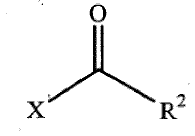 dans lesquels R² et R³ sont identiques ou différents, et sont choisi parmi l'hydrogène, les alkyles, alcényles et aryles en C₁ à C₁₀, hydroxyle et les alcoxy en C₁ à C₁₀, R² et R³ pouvant former une structure cyclique ; et X est choisi parmi hydroxyle, les halogénures, de préférence le brome et le chlore, et les groupes alcoxy.

28. Procédé selon la revendication 21, dans lequel le composé de fonctionnalisation est choisi parmi l'anhydride succinique, l'anhydride maléique, l'anhydride phtalique, l'anhydride glutarique, l'anhydride citraconique, l'anhydride itaconique et les autres anhydrides cycliques, le chlorure de succinyle, le chlorure de glutaryle, le chlorure d'itaconyle, le chlorure de malonyle, le chlorure d'adipoyle, le dichlorure de diéthylmalonyle, le chlorure de 3-méthyladipoyle, le chlorure de piméloyle, le chlorure de subéroyle, le chlorure d'azéolaoyle, le chlorure de sébacoyle, le dichlorure d'isophtaloyle, le dichlorure de phtaloyle, le chlorure de téréphtaloyle.

29. Procédé selon la revendication 21, dans lequel les unités dérivées de styrène dans l'élastomère sont des unités dérivées de styrène substituées.

30. Procédé selon la revendication 21, dans lequel l'isooléfine est choisi parmi l'isobutylène, l'isobutène, l'isoprène, le 2-méthyl-1-butène, le 3-méthyl-1-butène, le 2-méthyl-2-butène et/ou le 4-méthyl-1-pentène.

31. Procédé selon la revendication 29, dans lequel les unités dérivées de styrène sont présentes à hauteur de 1 à 15 % en poids de l'élastomère.

32. Procédé selon la revendication 21, dans lequel l'élastomère comprend des unités dérivées de *p-*méthylstyrène.

33. Procédé selon la revendication 21, dans lequel l'élastomère comprend des unités dérivées d'isobutylène et des unités dérivées de *p*-méthylstyrène.

34. Procédé selon la revendication 21, dans lequel l'élastomère comprend également des unités dérivées de multioléfine.

35. Procédé selon la revendication 21, dans lequel l'élastomère comprend du poly(styrène-isoprène-butadiène), du caoutchouc de polyisobutylène à ramification en étoile et/ou du poly(isobutylène-*co*-*p-*méthylstyrène).

36. Procédé selon la revendication 21, dans lequel l'élastomère est fonctionnalisé par mise en contact avec le composé de fonctionnalisation, les groupes fonctionnels étant présents sur l'élastomère à hauteur de 0,01 % en poids à 15 % en poids de l'élastomère.

37. Procédé selon la revendication 21, dans lequel l'argile a été traitée avec un agent exfoliant pour former une argile exfoliée.
